# EUROPEAN PATENT SPECIFICATION

(11) **EP 2 989 171 B1**
(45) Date of publication and mention of the grant of the patent: **18.12.2019**
(21) Application number: 14721170.0
(22) Date of filing: 02.04.2014
(51) Int. Cl.: C09J 5/02, C23C 18/12, C23C 18/04, B64F 5/00, B64F 5/10, B64F 5/50, C23C 28/00, C23C 22/83, C23C 22/37

(54) **SURFACE TREATMENT FOR STRUCTURAL BONDING TO ALUMINUM**
OBERFLÄCHENBEHANDLUNG ZUR STRUKTURELLEN BINDUNG AN ALUMINIUM
TRAITEMENT DE SURFACE POUR UNE LIAISON STRUCTURELLE À L'ALUMINIUM

(30) Priority: 26.04.2013 US 201313871132
(43) Date of publication of application: 02.03.2016
(73) Proprietor: The Boeing Company, Chicago, IL 60606-1596 (US)
(72) Inventor: FERGUSON, Kathy Lynn, Seattle, Washington 98072 (US); BLOHOWIAK, Kay, Tukwila, Washington 98108 (US); EVENS, Michael W., Tukwila, Washington 98108 (US)
(74) Representative: Harris, Jennifer Lucy
(86) International application number: PCT/US2014/032611
(87) International publication number: WO 2014/176006

(56) References cited:
- JP-A- 2006 152 267
- US-A- 4 591 511
- US-A- 5 849 110
- US-A1- 2011 300 406
- US-B1- 6 733 837

## Description

### FIELD

This application relates to metal surface treatment techniques and, more particularly, to techniques for structurally bonding adhesives to aluminum components using conversion coatings and sol-gel materials and without using adhesive bond primers.

### BACKGROUND

Metal treatment prior to bonding is a key factor for both the initial adhesion of a bonded joint and its long-term environmental durability. However, conventional bond primer application techniques are not convenient and/or complex to use. For example, many types of bond primers require long curing time and/or high temperatures (high temperature curing equipment such as heat blankets, heat lamps, heat guns, or ovens) that may be not readily available in many environments, e.g., at the gate or hangar. These duration and temperature requirements slow down the overall bonding process, require specialized equipment and environments, and can take an object being processed (e.g., an aircraft) out of commission for a long period of time. Furthermore, past bond failures, primarily due to inadequate surface preparation, have been a limiting factor in the current use of bonded hardware.

JP 2006 152267 has an abstract, a machine translation of which states "PROBLEM TO BE SOLVED: To provide a pretreatment method for adhesive coating, capable of improving the adhesion between a metal and an adhesive to be applied afterward without the need of using any toxic heavy metal such as chromium, and also capable of improving the adhesive strength and adhesion durability between a metal and another member to be joined to the metal. SOLUTION: The pretreatment method for adhesive coating to a metallic material comprises the step(I) of treating a to-be-treated object with a chemical treatment liquid containing at least one zirconium-fluorine complex and/or titanium-fluorine complex and the step(II) of coating the resultant object with a surface treatment liquid containing a hydrolytic polycondensation product from (A) at least one crosslinkable silane coupling agent of the formula(1) or its hydrolytic polycondensation product and (B) at least one adhesion-promoting silane coupling agent or its hydrolytic polycondensation product".

US 5,849,110 has an abstract, which states "a surface treatment, especially for titanium and aluminum alloys, forms a sol-gel film covalently bonded on the metal surface to produce strong, durable adhesive bonds between the metal and an organic adhesive without using toxic chemicals and while significantly reducing or eliminating rinse water requirements of traditional anodizing or etching processes. An aqueous sol containing an alkoxyzirconium and an organosilane with an organic acid catalyst and zirconium stabilizer is applied to etched or grit blasted substrates by dipping, spraying, or drenching, to produce bonds in a single application comparable in strength and performance to standard anodize controls. Parameters affecting performance include the sol composition, the Si/Zr ratio, the ratio of sol ingredients, the concentration of the sol, the carrier solvent, solution age, catalysts, surface pretreatment, application method, curing process, and primer used".

US 4,591,511 has an abstract, which states "a method for effecting repairs of the damaged components of a machinery in the field which would otherwise require high temperature treatment of the damaged components to form a metal-oxide epoxy joint in a shop. The method includes preparing a repair patch which includes a metal sheet with the metal oxide layer thereon, applying a thin high performance protective coating thereover, covering thereof with a sacrificial backing sheet and then curing the adherent-top coat backing sheet to form a highly durable bonded system which can be stored until needed. At the time of repair the backing sheet is removed by sanding or grit blasting and the adherent is applied to the structure to be repaired under ordinary temperature conditions.".

### SUMMARY

In an aspect, a method for structurally bonding an adhesive layer to an aluminum component without using an adhesive bond primer is provided as defined in claim 1. In another aspect, an apparatus is provided as defined in claim 8.

Provided is a method for structurally bonding an adhesive to an aluminum component without using an adhesive bond primer. The method involves removing contaminants from a surface of the aluminum component. A cleaned surface is formed on the aluminum component during this operation. The method proceeds with depositing a conversion coating onto the cleaned surface of the aluminum component, which forms a conversion layer on the cleaned surface. The method proceeds with depositing a sol-gel material on the conversion coating thereby forming a sol-gel layer on the conversion layer. After forming the sol-gel layer, the method proceeds with depositing an adhesive layer onto the sol-gel layer and applying an aluminum patch.

After curing, the adhesive layer forms a structural bond with the aluminum component and the aluminum patch.

Provided also is an apparatus including an aluminum component, a conversion layer, a sol-gel layer, a cured adhesive layer, and an aluminum patch. The aluminum patch is disposed over the cured adhesive layer. The conversion layer is disposed over the aluminum component. The sol-gel layer is disposed over the conversion layer, while the cured adhesive layer disposed over the sol-gel layer. The conversion layer, the sol-gel layer, and the cured adhesive layer form a stack disposed in between the aluminum component and the aluminum patch. The stack provides a structural bond between the aluminum component and the aluminum patch.

These and other embodiments are described further below with reference to the figures.

### BRIEF DESCRIPTION OF THE DRAWINGS

FIG. 1A is a schematic cross-sectional representation of a system during structural bonding of an aluminum patch to an aluminum component, in accordance with some embodiments.
FIG. 1B illustrates a top schematic view of an apparatus that includes a conversion layer, a sol-gel layer, and a cured adhesive layer as well as an aluminum patch and an aluminum component that are structurally bound by the conversion layer, the sol-gel layer, and the cured adhesive layer, in accordance with some embodiments.
FIG. 2 illustrates a process flowchart corresponding to a method for structurally bonding an adhesive or, more specifically, an aluminum patch to an aluminum component without using an adhesive bond primer, in accordance with some embodiments.
FIG. 3 is a schematic illustration of a structurally bonded sub-assembly including an adhesive layer, an aluminum component, and a sol-gel layer disposed between the adhesive layer and the aluminum component, in accordance with some embodiments.
FIG. 4A is a process flowchart reflecting some aircraft manufacturing and service operations, in accordance with some embodiments.
FIG. 4B is a block diagram illustrating various components of an aircraft, in accordance with some embodiments.

### DETAILED DESCRIPTION

In the following description, numerous specific details are set forth in order to provide a thorough understanding of the presented concepts. The presented concepts may be practiced without some or all of these specific details. In other instances, well known process operations have not been described in detail so as to not unnecessarily obscure the described concepts. While some concepts will be described in conjunction with the specific embodiments, it will be understood that these embodiments are not intended to be limiting.

### Introduction

Conventional processes of forming structural bonds to aluminum components, such as external surfaces of aircrafts, typically use bond primers and/or other materials that are difficult to work with in the field. For example, an adhesive bond primer may need a temperature of 250F (121°C) for 90 minutes for adequate curing of the adhesive bond primer. This temperature requires a powerful heat source, such as a heat blanket, an oven, or a heat gun, which is often not available in the field and/or often cannot be used for safety reasons, such as fuel vapors and other combustible materials present in the environment. Furthermore, applying and curing the adhesive bond primer tend to be a very laborious and lengthy procedure often taking more than 4 hours for the entire process. At the same, structural bonds often need to be formed in the field within a short period of time, e.g., while an aircraft is on the ground at an airport.

Provided are surface treatment processes for establishing structural bonds to aluminum components. In some embodiments, the treated surfaces is used to bond various patches that may be also made from aluminum or various other materials, such as titanium, and composite materials, such as carbon fibers, fiber glass, and the like. These surface treatment processes eliminate the need to use adhesive bond primers. As a result, these processes do not use high temperatures and provide substantial time savings without sacrificing the quality and strength of the structural bonds. Instead of using an adhesive bond primer, the surface of an aluminum component is first treated with a conversion coating, such as ALODINE® (available from Henkel Corporation in Dusseldorf, Germany), and then with a sol-gel material, such as BOEGEL-EPII (available from The Boeing Company in Chicago, IL). An adhesive is then applied directly onto the treated surface of the aluminum component without any adhesive bond primer. A combination of these two treatments (i.e., the conversion coating treatment and the sol-gel material treatment) allows forming a structural bond even though the adhesive bond primer is not present in the resulting structure.

For purposes of this document, a structural bond is defined as a bond between two structural components, such as an aluminum component and an aluminum patch, with an adhesive disposed between these two structural components. As such, structural bonds also present between each one of the two structural components and the adhesive layer. The structural bonding should be distinguished from bonding between two components, one of which is a non-structural component, such a protective coating or paint. However, it should be noted that this process may be used for nonstructural applications as well. For example, a lap sheer strength of a non-structural bond may be less than about 1000 psi (6895 kPa), while a lap sheer strength of a structural bond may at least about 1000 psi (6895 kPa) at the room temperature or, more typically, at least about 2000 psi (13790 kPa) or even at least about 3000 psi (20684 kPa).

The surface treatment processes described herein eliminate a need for powerful heating equipment, such as electrical heaters, and allow bonding to be performed at locations where such heaters are not available or permitted, e.g., locations with high flammability hazards. These features of the surface treatment processes can improve fleet availability since bonding can be performed in the field, often without taking the aircraft out of commission. For example, the process may be performed at a gate or in an airport hangar as opposed to returning the aircraft to the manufacturer or a special repair location. The overall structural bonding process including preparing a surface for treatment, treating the surface, and applying and curing an adhesive may take only 2-4 hours, while a typical process than involves an bond primer may take as long as 8-24 hours.

### Structural Bonding Examples

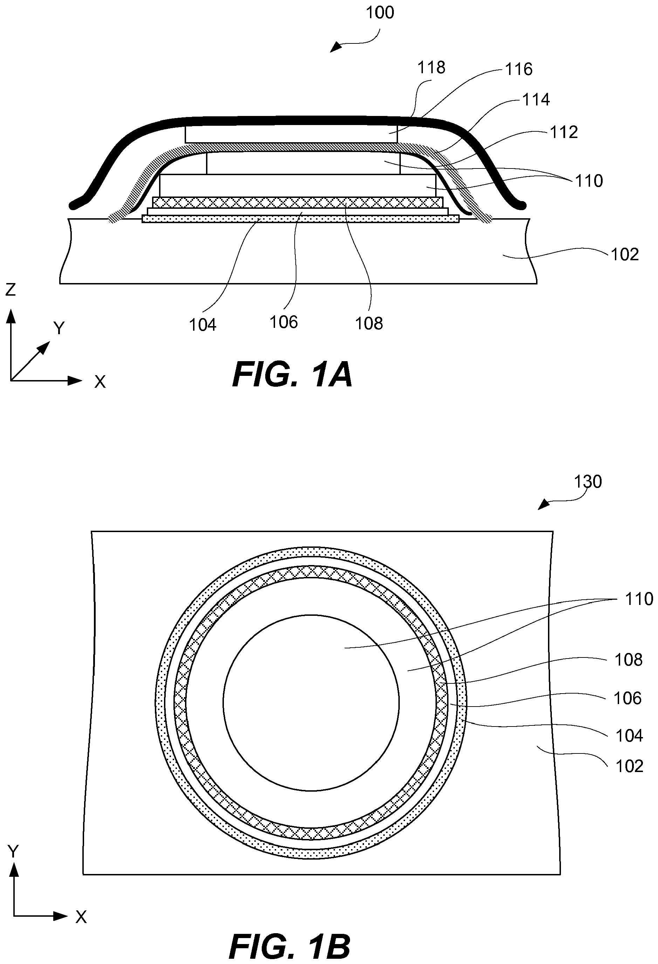

FIG. 1A is a schematic cross-sectional representation of a system 100 during structural bonding of an aluminum patch 110 to an aluminum component 102, in accordance with some embodiments. Other components of system 100 are a conversion layer 104, a sol-gel layer 106, and a cured adhesive layer 108. Conversion layer 104 may be referred to as a first layer, sol-gel layer 106 may be referred to as a second layer, and cured adhesive layer 108 may be referred to as a third layer. It should be noted that conversion layer 104 may include multiple sub-layers. Likewise, sol-gel layer 106 may also include multiple sub-layers.

Conversion layer 104, sol-gel layer 106, and cured adhesive layer 108 are disposed between aluminum patch 110 and aluminum component 102 such that conversion layer 104 is disposed over aluminum component 102, sol-gel layer 106 is disposed over conversion layer 104, and cured adhesive layer 108 disposed over sol-gel layer 106. Conversion layer 104 comes in contact with aluminum component 102. In some embodiments, conversion layer 104 is partially or completely integrated into aluminum component 102 by effectively modifying the surface of aluminum component 102. Cured adhesive layer 108 comes in contact with aluminum patch 110, which may have a specially treated surface to provide enhanced bonding to cured adhesive layer 108. For example, the surface may be treated by applying an adhesive bond primer (e.g., pre-treating aluminum patch 110 during its fabrication). Alternatively, aluminum patch 110 may be treated with a combination of a conversion coating and a sol-gel coating, and this treatment may be performed in the field.

Conversion layer 104, sol-gel layer 106, and cured adhesive layer 108 as well as aluminum patch 110 and aluminum component 102 become parts of an apparatus (e.g., an aircraft). In other words, conversion layer 104, sol-gel layer 106, and cured adhesive layer 108 as well as aluminum patch 110 remain attached to aluminum component 102 after structural bonding procedure is completed. Other components of system 100 that do not become permanently attached to the apparatus are peel ply 112, vacuum bag 114, one or more heat packs 116, and heat insulation 118. These components may be used temporarily, e.g., during curing of the adhesive in cured adhesive layer 108. For example, peel ply 112 may be used to control distribution of the uncured adhesive and prevent contact between the uncured adhesive and other components of system 100, such as heat insulation 118 or vacuum bag 114. Vacuum bag 114 may be used to isolate the curing area from the ambient environment and apply some pressure onto aluminum patch 110. Additional pressure may be provided by external mechanical actuators, not shown. In some embodiments, external mechanical actuators may be used instead of vacuum bag 114. Heat packs 116 may be chemical phase changing material (PCM) contained in heat packs or rectangular flat bottles, or containers capable of maintaining a required temperature for a required period of time. In some embodiments, an adhesive capable of curing at a room temperature is used, such as HYSOL® EA 9394™ available from Henkel Corporation in Dusseldorf, German. HYSOL® EA 9394™ fully cures after about 5-7 days at 77F (25°C) or may be cured at a higher temperature if a shorter curing period is needed. Examples of higher curing temperature adhesives include HYSOL® EA 9696™ also available from Henkel Corporation in Dusseldorf, Germany. HYSOL® EA 9696™ can be cured at temperatures of 225 F-265 F (107-129°C) to fully cure. In some embodiments, other types of heat sources (e.g., an electrical heater, heat blanket, heat lamps, heat gun, or oven) may be used instead or in addition to heat packs 116. Heat insulation 118 may be used to prevent heat losses from cured area.

FIG. 1B illustrates a top schematic view of an apparatus 130 that includes conversion layer 104, sol-gel layer 106, and cured adhesive layer 108 as well as aluminum patch 110 and aluminum component 102, in accordance with some embodiments. In some embodiments, aluminum patch 110 includes two portions, i.e., a larger bottom portion and a smaller top portion. For example, the bottom portion may have a diameter that is between about 1.2 to 2 times greater than the diameter of the top portion. In a specific example, the bottom portion has a diameter of about 6 inches, while the top portion has a diameter of about 4.5 inches. The thickness of each portion may be between about 0.025 inches and 0.075 inches, such as about 0.040 inches. Each portion may be pretreated with an adhesive bond primer or a combination of a conversion coating and a sol-gel material as noted above. The two portions may be adhered (or previously bonded) together using an epoxy adhesive. The same adhesive may be used between aluminum patch 110 to aluminum component, i.e., to form cured adhesive layer 108.

### Processing Examples

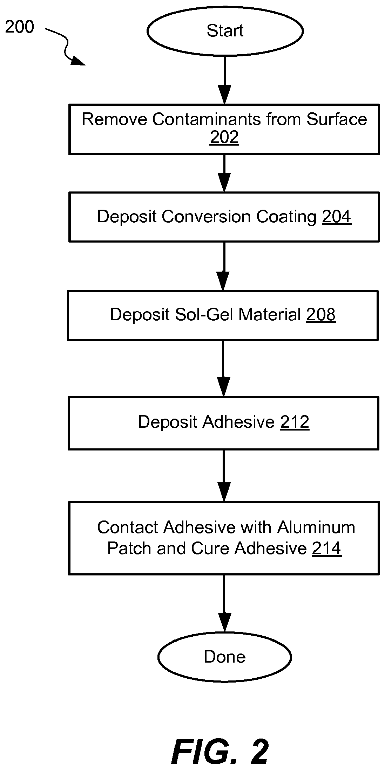

FIG. 2 illustrates a process flowchart corresponding to a method 200 for structurally bonding an aluminum patch to an aluminum component using an adhesive but not using an adhesive bond primer, in accordance with some embodiments. Method 200 may commence with removing contaminants from the surface of the aluminum component during operation 202. Some examples of contaminants include paints, primers, aluminum oxide, and the like. Operation 202 may involve sanding the surface of the aluminum component with a sanding disk, cleaning the surface using compressed air, acetone, and/or a rumple cloth, wiping the surface with a lint-free wipe wetted with acetone while immediately thereafter wiping the surface with a dry lint-free wipe before the acetone dries on the part surface. Sanding, compressed air cleaning, and/or acetone wiping and drying may be repeated one or more times. For example, a sequence may involve sanding, compressed air cleaning, acetone wiping and drying, sanding, and compressed air cleaning as the final step. Sanding a final time with 180 grit Merit paper (available from Saint-Gobain Abrasives, Inc. in Stephenville, TX) in the +/- 90 and +/- 45 degree pattern may be used for ensuring the cleanness, removal of oxides, and surface topography needed for bonding sol-gel.

A conversion coating may be applied on a freshly sanded surface that was blown off by clean compressed air. Overall, a cleaned surface is formed during operation 202. The cleaned surface may be characterized as a surface that is free from organic contaminants and free from surface oxidation. The cleaned surface has minimal smearing of metal over the surface and may have an increased surface roughness to aid with adhesion in comparison to the untreated surface. Without being restricted to any particular theory, it is believed that the adhesion and durability of the structural bond are mostly affected by the surface chemistry and efficient removal of oxidation. While additional surface roughness helps by increasing the surface area available and by providing some degree of mechanical interlock or shear forces against the edge of the rough areas, the effect of the surface roughness is less significant than the chemical effect of cleaning and then treating the surface as explained below.

Method 200 may proceed with depositing a conversion coating onto the cleaned surface of the aluminum component during operation 204. In some embodiments, operation 204 is performed soon after operation 202 to prevent contamination of the cleaned surface. For example, the gap between operations 202 and 204 may be less than 60 minutes and, in some embodiments, less than 15 minutes. The conversion coating may be sprayed onto the cleaned surface. In some embodiments, other deposition techniques may be used, such as dipping, immersion, spinning, and brushing. Various examples of conversion coating are presented below.

During operation 204, a conversion layer is formed on the cleaned surface. For example, the conversion coating is allowed to dwell for a sufficient period of time until a light iridescent golden to tan layer is formed. The conversion coating dwell time may be between about 30 seconds and 3 minutes for aluminum alloys. The conversion coating may be rinsed and allowed to dry. The dry time may be between about 60 minutes to 120 minutes at a temperature of between about 10°C and 35°C. The sol-gel material may be applied on the dried conversion layer. In some embodiments, the sol-gel material is applied no later than 8 hours after the conversion coating is dried or, more specifically, no later than 4 hours or, even more specifically, no later 2 than hours. The longer period of time may cause undesirable changes in the conversion layer, such as conversion layer becoming hydrophobic and resulting in poor structural bonding performance.

In some embodiments, operation 204 also involves rinsing the conversion layer with water and allowing the conversion layer to dry from water for a period of between about 30 minutes to about 240 minutes or, more specifically, for a period of between about 60 minutes to about 120 minutes. These water drying times are specified for a temperature of between about 10°C and 35°C and may change depending on the ambient conditions. Rinsing controls the thickness of the conversion coating and eliminates residual acids at the interface. The upper limit for drying is used to control moisture content of the conversion coating and to prevent it from becoming overly dry or dehydrated which could cause it to become hydrophobic and could adversely affect its ability to bond with the sol-gel layer.

Method 200 may proceed with depositing a sol-gel material over the conversion layer during operation 208. The sol-gel material may be sprayed onto to the conversion layer. Other deposition techniques may be used as well, such as dipping, immersion, spinning, and brushing. In some embodiments, a spray-drenching technique may be used. This technique involves spraying generously the conversion layer with the sol-gel material and allowing excess of the sol-gel material to run off the surface of the conversion layer. In some embodiments, before the deposited sol-gel is dried additional sol-gel material may be sprayed onto it. This operation may be repeated multiple times to deposit an adequate amount of the sol-gel material onto the surface. It will be appreciated that the deposited sol-gel material may not be dried. Sol gel must be kept wet for about 0.5 minutes to 5 minutes, e.g., about 2 minutes (depending on specific sol gel formulation used) before spraying additional sol-gel material on it.

Operation 208 may also involve verifying that the conversion layer is water break free based on the flow of the sol-gel material on the surface of the conversion layer. For example, if the sol-gel material does not flow as a continuous sheet across the surface of the conversion layer, then the surface is not water break free and the surface must be prepared again by removing the conversion layer and repeating operations 202-204. The time gap between the end of the operation 204 and the beginning of operation 208 may be less than 2 hours or, more specifically, less than 1 hour.

In some embodiments, before the sol-gel material is applied onto the conversion layer, the sol-gel material is prepared and allowed to sit for a period of time. For example, a sol-gel material may be mixed out of the two components, i.e., a 2-part kit. The sol-gel material may have a pot-life, which is based on the speed of the hydrolysis and condensation reactions that occur within the sol-gel mixture. Excessive wait (e.g., more than 10 hrs or more than 24 hrs for some sol-gel materials) can cause excessive polymerization within the sol-gel mixture and forming of colloidal particles are formed. This reduces the active components in the sol-gel mixture that provide adhesion to the surface. Instead the active components are used up within the solution in the particle formation. For example, the sol-gel material may be let sit for between about 15 minutes and 60 minutes, such as about 30 minutes prior to applying the sol-gel material.

During operation 208, a sol-gel layer is formed on the conversion layer. The sol-gel must be allowed to dwell for a sufficient period of time for the specific formulation and kept wet for a minimum period of time, typically 2 minutes before it is allowed to dry. The temperature of between about 10°C and 35°C may be used. In some embodiments, the sol-gel material is allowed to dry for at least about 30 minutes.

Method 200 may proceed with depositing an adhesive onto the sol-gel layer during operation 212. In some embodiments, operation 212 is performed within a set period of time after completing operation 208, for example, within 24 hours or, more specifically, within 2 hours. Various types of adhesives may be used, such as epoxy adhesives, room temperature cure paste adhesives, film adhesives, pressure sensitive adhesives, ultraviolet (UV) curable adhesives, polyurethane adhesives, polyimide adhesives, silicon adhesives. Some specific examples of pressure sensitive adhesives include a speed tape, which is a metallic foil with an adhesive designed to secure the tape under high speed airflow and is used on the skins of airplanes, and appliqué. In some embodiments, the sol-gel material includes a functional group matching a type of the adhesive applied over the sol-gel layer to provide stronger bonding.

Method 200 may proceed with contacting the adhesive layer with an aluminum patch and then curing the adhesive during operation 214. After curing, the adhesive layer forms a structural bond between the aluminum component and the aluminum patch.

### Conversion Coating Examples

Conversion coatings are specific coatings for metal structures, such as aluminum structures, in which the surfaces of these metal structures undergo chemical reactions with the conversion coating and form protective coatings on these surfaces. In other words, a metal structure and a conversion coating are both contributing to formation of a protective coating, and the protective coating includes a metal component as well as one or more conversion coating components. The thickness of the protective coating may be between about 10 nanometers to 800 nanometers or, more specifically, between 100 nanometers and 200 nanometers.

The conversion coating used on the cleaned surface of an aluminum structure may be a chromate conversion coating or a phosphate conversion coating. Some specific examples of chromate conversion coatings include IRIDITE® (available from MacDermid, Inc. in Waterbury, CT) and ALODINE® (available from Henkel Corporation in Dusseldorf, Germany). Chromate conversion coatings may be applied onto aluminum structures in accordance with MIL-DTL-5541, Chemical Conversion Coatings on Aluminum and Aluminum Alloys.

In some embodiments, the conversion coating includes hexavalent chromium. For example, a conversion coating may include between 30% by weight and 60% by weight of chromic acid. Other components may include between about 10% by weight and 30% by weight of potassium fluoborate, between about 10% by weight and 30% by weight of potassium ferricyanide, between about 1% by weight and 10% by weight of sodium fluoride, and between about 10% by weight and 30% by weight of potassium fluozirconate.

In some embodiments, the conversion coating may be substantially free from hexavalent chromium. For example, a phosphate conversion coating may be used. The phosphate conversion coating may include a dilute solution of phosphoric acid and/or phosphate salts (e.g., manganese phosphate, iron phosphate, or zinc phosphate) and forms a layer of insoluble crystalline phosphates (e.g., aluminum phosphate when treating an aluminum structure).

### Sol-Gel Examples

Sol-gel materials used for structurally bonding may be a mixture of metal oxides and silane coupling agents. It may be an aqueous solution of the reactive metal alkoxide precursors, from which the coating develops via the sol-gel process. The sol-gel process is a series of reactions where, first, a soluble metal species (typically a metal alkoxide or metal salt) hydrolyzes to form metal hydroxide species which then, through condensation reactions, form solid particles and/or gel networks. The soluble metal species usually contains organic ligands tailored to correspond with the resin in the bonded structure. The metal hydroxides condense (i.e., peptize) in solution to form a hybrid organic/inorganic polymer. Depending on reaction conditions, the metal polymers may condense to colloidal particles or they may grow to form a network gel. The ratio of organic to inorganic components in the polymer matrix is controlled to maximize performance for a particular application.

Various types of sol-gel materials may be used. In some embodiments, sol-gel materials are water soluble, such as BOEGEL®-EPII available from The Boeing Company in Chicago, IL. Typically, sol-gel materials are used to replace conversion coatings for protective coating applications. However, it has been found that the sol-gel and conversion coating materials can be applied together and provide stronger structural bonds and protection than when the sol-gel and conversion coating materials are used individually. Furthermore, a combination of the sol-gel and conversion coating material allows eliminating an adhesive bond primer as described above.

In some embodiments, a sol-gel material including an organosilane and a zirconium alkoxide may include between about 2 vol % and 50 vol % of organosilane and between about 0.3 vol % and 25 vol % of zirconium alkoxide. The molar ratio of metal (e.g., zirconium) to silicon may be between about 1:1 and1:10 or, more specifically, about 1:3.5. In some embodiments, the sol-gel material also includes a complexing agent.

Suitable alkoxide compounds include metallic alkoxide compounds that have an organo moiety (e.g., an aliphatic or alicyclic moiety), such as a lower n-alkoxy moiety having 2-8 carbon atoms. For example, alkoxide compounds having the general formula Zr(R-O)₄ wherein R is lower aliphatic having 2 to 8 carbon atoms, especially aliphatic (alkyl groups), tetra n-zirconium, as well as branched aliphatic, alicyclic and aryl groups, may be used. For example, approximately 70% zirconium n-propoxide in propanol (TPOZ) is suitable for the sol-gel coating formulation. Additionally other metal alkoxides, such as titanates, and yttrium alkoxides, may be utilized as the alkoxide.

Suitable organosilane compounds include, but are not limited to, 3-glycidoxypropyltrimethoxysilane (GTMS). Other suitable organosilanes for making the sol-gel coating include, but are not limited to, tetraethylorthosilicate, 3-aminopropyltriethoxysilane, 3-glycidoxy-propyltriethoxysilane, p-aminophenylsilane, p or m-aminophenylsilane, allyltrimethoxysilane, n-(2-aminoethyl)-3-aminopropyltrimethoxysilane, 3-aminopropyltriethoxysilane, 3-aminopropyltrimethoxysilane, 3-glycidoxypropyldiisopropylethoxysilane, (3-glycidoxypropyl)methyldiethoxysilane, 3-glycidoxypropyltrimethoxysilane, 2-(3,4-epoxycyclohexyl)ethyltriethoxysilane, 3-mercaptopropyltrimethoxysilane, 3-mercaptopropyltriethoxysilane, 3-methacryloxypropylmethyldiethoxysilane, 3-methacryloxypropylmethyldimethoxysilane, 3-methacryloxypropyltrimethoxysilane, n-phenylaminopropyltrimethoxysilane, vinylmethyldiethoxysilane, vinyltriethoxysilane, vinyltrimethoxysilane and combinations thereof.

A complexing agent may be an organic acid, such as acetic acid. Other suitable complexing agents for use with the sol-gel mixture, include, but are not limited to organic acids, such as oxalic acid, citric acid, acetylacetonates, glycols, ethoxyethanol, H₂NCH₂CH₂OH (ethanolamine), or other organic acid complexing agents.

In specific embodiments, the sol-gel material includes zirconium n-propoxide and 3-glycidoxypropyltrimethoxy silane or, more specifically, between about 0.5% by weight and 2% by weight (e.g., about 1% by weight) of zirconium n-propoxide and between about 1 % by weight and 5% by weight (e.g., about 2% by weight) of 3-glycidoxypropyltrimethoxy silane.

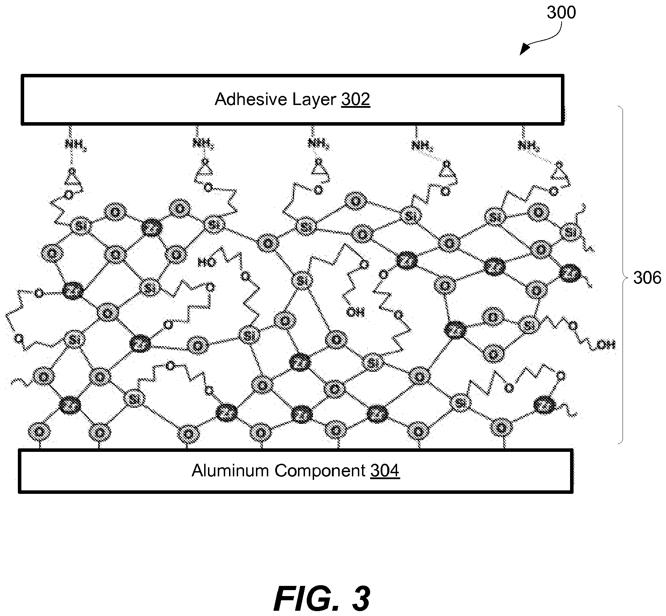

A combination of zirconium and silicon in a sol-gel material may be particularly suitable for aluminum surfaces and epoxy adhesive. Organic functionality of the material is due to the glycidoxypropyl group on the silane component. It is hypothesized that the difference in condensation rates between the silicon and zirconium components produces a hybrid inorganic/organic layer with a compositional gradient from the metallic surface to the subsequent coating layer as, for example, shown in FIG. 3. Specifically, FIG. 3 is a schematic illustration of a structurally bonded sub-assembly 300 including an adhesive layer 302, aluminum component 304 and a sol-gel layer 306 disposed between adhesive layer 302 and aluminum component 304, in accordance with some embodiments. An aluminum patch and a conversion coating layer are not shown for simplicity and clarity of the illustration. Sol-gel layer 306 is show to form covalent bonds with both adhesive layer 302 and aluminum component 304 thereby establishing a structural bond between at least adhesive layer 302 and aluminum component 304.

Sol-gel layer 306 may have an even (e.g., gradient) distribution of silicon containing groups and zirconium containing groups. Specifically, there may be more silicon containing groups at the interface with adhesive layer 302, which allows forming covalent bonds with epoxy groups (in this example). In a similar manner, there may be more zirconium containing groups at the interface with aluminum component 304, which allows forming covalent bonds with aluminum or other metals of aluminum component 304. As noted above, the surface of aluminum component 304 may be modified with a conversion containing and, for example, may contain aluminum as well as other metals. Without being restricted to any particular theory it is believed that this conversion coating treatment further improves the bonding strength between aluminum component 304 and sol-gel layer 306. The combination of inorganic and organic polymer fractions in sol-gel layer 306 yields unique properties, i.e., a hybrid of what would be expected of the individual components. For example, the thin sol-gel layer may be more flexible than an inorganic metal oxide film of a similar thickness.

In some examples, a sol-gel material includes water and glacial acetic acid as a catalyst. A portion of the water may be replaced with other solvents that provide desirable properties or processing characteristics to the composition. Furthermore, the sol-gel material may include a surfactant, such as Antarox BL-240 available from Rhodia-Solvay Group in Brussels, Belgium. The thickness of the sol-gel layer can be controlled by varying the composition. In some embodiments, the thickness is between about 10 nanometers and 800 nanometers, such as between about 100 nanometers and 500 nanometers.

### Examples of Aircrafts

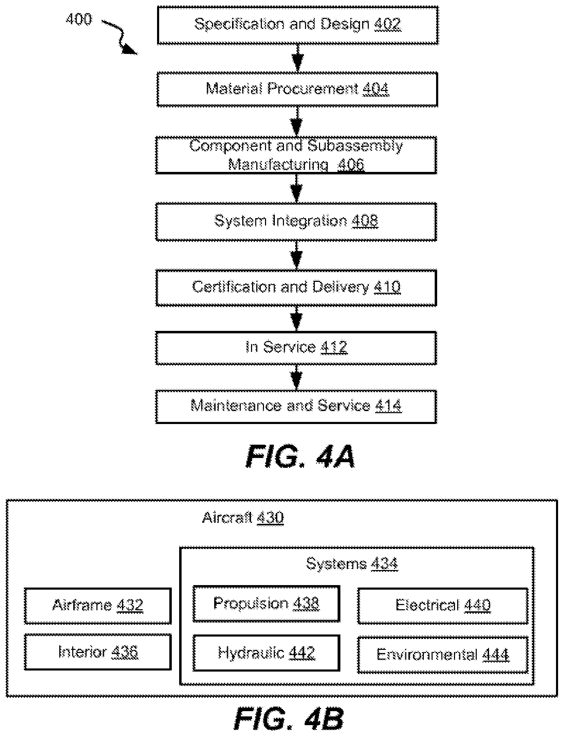

An aircraft manufacturing and service method 400 shown in FIG. 4A and an aircraft 430 shown in FIG. 4B will now be described to better illustrate various features of structural bonds presented herein. During pre-production, aircraft manufacturing and service method 400 may include specification and design 402 of aircraft 430 and material procurement 404. The production phase involves component and subassembly manufacturing 406 and system integration 408 of aircraft 430. Thereafter, aircraft 430 may go through certification and delivery 410 in order to be placed in service 412. While in service by a customer, aircraft 430 is scheduled for routine maintenance and service 414 (which may also include modification, reconfiguration, refurbishment, and so on). While the embodiments described herein relate generally to servicing of commercial aircraft, they may be practiced at other stages of the aircraft manufacturing and service method 400.

Each of the processes of aircraft manufacturing and service method 400 may be performed or carried out by a system integrator, a third party, and/or an operator (e.g., a customer). For the purposes of this description, a system integrator may include, without limitation, any number of aircraft manufacturers and major-system subcontractors; a third party may include, for example, without limitation, any number of venders, subcontractors, and suppliers; and an operator may be an airline, leasing company, military entity, service organization, and so on.

As shown in FIG. 4B, aircraft 430 produced by aircraft manufacturing and service method 400 may include airframe 432, interior 436, and multiple systems 434 and interior 436. Examples of systems 434 include one or more of propulsion system 438, electrical system 440, hydraulic system 442, and environmental system 444. Any number of other systems may be included in this example. Although an aircraft example is shown, the principles of the disclosure may be applied to other industries, such as the automotive industry.

Apparatus and methods embodied herein may be employed during any one or more of the stages of aircraft manufacturing and service method 400. For example, without limitation, 406 may be fabricated or manufactured in a manner similar to components or subassemblies produced while aircraft 430 is in service.

Also, one or more apparatus embodiments, method embodiments, or a combination thereof may be utilized during component and subassembly manufacturing 406 and system integration 408, for example, without limitation, by substantially expediting assembly of or reducing the cost of aircraft 430. Similarly, one or more of apparatus embodiments, method embodiments, or a combination thereof may be utilized while aircraft 430 is in service, for example, without limitation, to maintenance and service 414 may be used during system integration 408 and/or maintenance and service 414 to determine whether parts may be connected and/or mated to each other.

### Experimental Results

A series of aluminum lap shear and hot/wet conditioned wedge coupon tests were conducted to compare bonding strength and environmental robustness of test coupons. Test coupons had a sol-gel material applied. No bond primer was used on the test coupons. Control coupons were first anodized using phosphoric acid. A bond primer was then applied onto the treated surface.

First, all bare aluminum coupons were cleaned of contaminants and oxides by wiping the coupons with acetone and then sanding the wiped coupons with Merit 180 grit sand paper at +/- 90 and +/- 45 degrees followed by compressed air blowing to remove all dust. The control coupons were anodized using phosphoric acid and then primed with an adhesive bond primer. The bond primer was then fully cured using elevated temperatures. The test coupons were coated with a sol-gel material applied directly to the bare sanded aluminum surfaces. The sol-gel material was cured for 15 minutes. Both test and control coupons were then bonded using HYSOL® EA 9394™ epoxy adhesive and cured at 150 F (66°C) for 130 minutes. After the adhesive was cured, both sets of coupons underwent room temperature lap shear testing and wedge crack growth testing at 140F and 85% relative humidity in accordance with ASTM D3762, Standard Test method for Adhesive-Bonded Surface Durability of Aluminum (Wedge Test). The average lap shear value for the control coupons was about 3200 psi (22063 kPa). The average lap sheer strength for the test coupons was about 2700 psi (18616 kPa). The wedge crack growth results for both the control and test coupons was about the same and measured approximately 0.4 inches (1 cm) after 168 hours. The failure mode for the control coupons was 100% cohesive and the failure mode for the test coupons was approximately 98% cohesive and 2% adhesive.

Both sets of coupons had sufficient structural bonds for various aircraft applications. Without being restricted to any particular theory, it is believed that a longer sol-gel curing duration would further increase the lap sheer strength of the tested samples. Furthermore, addition of a conversion coating treatment prior to the sol-gel treatment should increase bond strength and further increase the lap sheer strength of the tested samples.

### Conclusion

Although the foregoing concepts have been described in some detail for purposes of clarity of understanding, it will be apparent that certain changes and modifications may be practiced within the scope of the appended claims. It should be noted that there are many alternative ways of implementing the processes, systems, and apparatuses. Accordingly, the present embodiments are to be considered as illustrative and not restrictive.

## Claims

1. A method for structurally bonding an adhesive layer to an aluminum component without using an adhesive bond primer, the method comprising:
removing contaminants (202) from a surface of the aluminum component (102), wherein removing the contaminant forms a cleaned surface;
depositing a conversion coating (204) onto the cleaned surface of the aluminum component (102), wherein depositing the conversion coating forms a conversion layer (104) on the cleaned surface of the aluminum component (102);
depositing a sol-gel material (208) comprising an organosilane and a zirconium alkoxide over the conversion layer (104), wherein depositing the sol-gel material forms a sol-gel layer (106) on the conversion layer (104); and
depositing an adhesive layer (212) onto the sol-gel layer (106),
further comprising contacting the adhesive layer (214) with an aluminum patch (110) and curing the adhesive layer (214), wherein a structural bond is formed between the aluminum patch (110) and the aluminum component (102) by the cured adhesive layer (108).

2. The method of claim 1, wherein depositing the sol-gel material (208) comprises depositing the sol-gel material comprising zirconium n-propoxide and 3-glycidoxypropyltrimethoxy silane.

3. The method of any of claims 1-2, wherein depositing the sol-gel material (208) comprises depositing the sol-gel material comprising between 0.5% by weight and 2% by weight of zirconium n-propoxide and between 1% by weight and 3% by weight of 3-glycidoxypropyltrimethoxy silane.

4. The method of any of claims 1-3, wherein depositing the sol-gel material (208) is performed at a temperature of between about 10°C and 35°C.

5. The method of any of claims 1-4,wherein depositing the sol-gel material (208) comprises spraying.

6. The method of any of claims 1-5, wherein depositing the conversion coating (204) comprises depositing the conversion coating comprising between 30% by weight and 60% by weight of chromic acid.

7. The method of any of claims 1-6, wherein the conversion layer has a thickness of between 10nm to 800nm.

8. An apparatus comprising:
an aluminum component (102);
a conversion layer (104), the conversion layer disposed over the aluminum component (102);
a sol-gel layer (106) comprising an organosilane and a zirconium alkoxide, the sol-gel layer disposed over the conversion layer (104);
a cured adhesive layer (108), the cured adhesive layer disposed over the sol-gel layer (106); and
an aluminum patch (110) disposed over the cured adhesive layer (108), wherein the conversion layer (104), the sol-gel layer (106), and the cured adhesive layer (108) form a stack disposed in between the aluminum component (102) and the aluminum patch (110), the stack providing a structural bond between the aluminum component(102) and the aluminum patch (110).

9. The apparatus of claim 8, wherein the cured adhesive layer (108) comprises one of epoxy, polyimide, or polyurethane.

10. The apparatus of any of claims 8-9, wherein the conversion layer (104) comprises one of a chromate conversion coating or a phosphate conversion coating.

11. The apparatus of any of claims 8-10, wherein the conversion layer (104) comprises hexavalent chromium.

12. The apparatus of any of claim 8-10, wherein the conversion layer (104) is substantially free from hexavalent chromium.

13. The apparatus of any of claim 8-12, wherein the conversion layer has a thickness of between 10nm to 800nm.

## Patentansprüche

1. Verfahren zum strukturellen Verbinden einer Klebeschicht mit einer Aluminiumkomponente ohne Verwendung einer Grundierung für Klebeverbindungen, wobei das Verfahren Folgendes aufweist:
Entfernen von Verunreinigungen (202) von einer Oberfläche der Aluminiumkomponente (102), wobei das Entfernen der Verunreinigung eine gereinigte Oberfläche bildet;
Abscheiden einer Konversionsbeschichtung (204) auf der gereinigten Oberfläche der Aluminiumkomponente (102), wobei das Abscheiden der Konversionsbeschichtung eine Konversionsschicht (104) auf der gereinigten Oberfläche der Aluminiumkomponente (102) bildet;
Abscheiden eines Sol-Gel-Werkstoffes (208), aufweisend ein Organosilan und ein Zirconiumalkoxid, über der Konversionsschicht (104), wobei das Abscheiden des Sol-Gel-Werkstoffes eine Sol-Gel-Schicht (106) auf der Konversionsschicht (104) bildet; und
Abscheiden einer Klebeschicht (212) auf der Sol-Gel-Schicht (106),
ferner aufweisend das In-Kontakt-Bringen der Klebeschicht (214) mit einem Aluminiumflicken (110) und Härten der Klebeschicht (214), wobei eine strukturelle Verbindung zwischen dem Aluminiumflicken (110) und der Aluminiumkomponente (102) durch die gehärtete Klebeschicht (108) gebildet wird.

2. Verfahren nach Anspruch 1, wobei das Abscheiden des Sol-Gel-Werkstoffes (208) das Abscheiden des Sol-Gel-Werkstoffes aufweist, das Zirconium-n-propoxid und 3-Glycidoxypropyltrimethoxysilan aufweist.

3. Verfahren nach einem der Ansprüche 1 bis 2, wobei das Abscheiden des Sol-Gel-Werkstoffes (208) das Abscheiden des Sol-Gel-Werkstoffes aufweist, der zwischen 0,5 Gew.-% und 2 Gew.-% Zirconium-n-propoxid und zwischen 1 Gew.-% und 3 Gew.-% 3-Glycidoxypropyltrimethoxysilan aufweist.

4. Verfahren nach einem der Ansprüche 1 bis 3, wobei das Abscheiden des Sol-Gel-Werkstoffes (208) bei einer Temperatur zwischen etwa 10 °C und 35 °C durchgeführt wird.

5. Verfahren nach einem der Ansprüche 1 bis 4, wobei das Abscheiden des Sol-Gel-Werkstoffes (208) Aufsprühen aufweist.

6. Verfahren nach einem der Ansprüche 1 bis 5, wobei das Abscheiden der Konversionsbeschichtung (204) das Abscheiden der Konversionsbeschichtung aufweist, die zwischen 30 Gew.-% und 60 Gew.-% Chromsäure aufweist.

7. Vorrichtung nach einem der Ansprüche 1 bis 6, wobei die Konversionsschicht eine Dicke zwischen 10 nm und 800 nm hat.

8. Vorrichtung, aufweisend:
eine Aluminiumkomponente (102);
eine Konversionsschicht (104), wobei die Konversionsschicht über der Aluminiumkomponente (102) angeordnet ist;
eine Sol-Gel-Schicht (106), die ein Organosilan und ein Zirconiumalkoxid aufweist, wobei die Sol-Gel-Schicht über der Konversionsschicht (104) angeordnet ist;
eine gehärtete Klebeschicht (108), wobei die gehärtete Klebeschicht über der Sol-Gel-Schicht (106) angeordnet ist; und
ein Aluminiumflicken (110), das über der gehärteten Klebeschicht (108) angeordnet ist, wobei die Konversionsschicht (104), die Sol-Gel-Schicht (106) und die gehärtete Klebeschicht (108) einen Stapel bilden, der zwischen der Aluminiumkomponente (102) und dem Aluminiumflicken (110) angeordnet ist, wobei der Stapel eine strukturelle Verbindung zwischen der Aluminiumkomponente(102) und dem Aluminiumflicken (110) bereitstellt.

9. Vorrichtung nach Anspruch 8, wobei die gehärtete Klebeschicht (108) Epoxy, Polyimid oder Polyurethan aufweist.

10. Vorrichtung nach einem der Ansprüche 8 bis 9, wobei die Konversionsschicht (104) eine von einer Chromat-Konversionsbeschichtung oder einer Phosphat-Konversionsbeschichtung aufweist.

11. Vorrichtung nach einem der Ansprüche 8 bis 10, wobei die Konversionsschicht (104) sechswertiges Chrom aufweist.

12. Vorrichtung nach einem der Ansprüche 8 bis 10, wobei die Konversionsschicht (104) im Wesentlichen frei von sechswertigem Chrom ist.

13. Vorrichtung nach einem der Ansprüche 8 bis 12, wobei die Konversionsschicht eine Dicke zwischen 10 nm und 800 nm hat.

## Revendications

1. Procédé de liaison structurelle d'une couche adhésive à un composant d'aluminium sans utilisation d'un apprêt de liaison adhésive, le procédé comprenant :
le retrait de contaminants (202) d'une surface du composant d'aluminium (102), dans lequel le retrait des contaminants forme une surface nettoyée ;
le dépôt d'un revêtement de conversion (204) sur la surface nettoyée du composant d'aluminium (102), dans lequel le dépôt du revêtement de conversion forme une couche de conversion (104) sur la surface nettoyée du composant d'aluminium (102) ;
le dépôt d'un matériau sol-gel (208) comprenant un organosilane et un alcoxyde de zirconium sur la couche de conversion (104), dans lequel le dépôt du matériau sol-gel forme une couche sol-gel (106) sur la couche de conversion (104) ; et
le dépôt d'une couche adhésive (212) sur la couche sol-gel (106),
comprenant en outre l'établissement de contact de la couche adhésive (214) avec un patch d'aluminium (110) et le durcissement de la couche adhésive (214), dans lequel une liaison structurelle est formée entre le patch d'aluminium (110) et le composant d'aluminium (102) par la couche adhésive durcie (108).

2. Procédé selon la revendication 1, dans lequel le dépôt du matériau sol-gel (208) comprend le dépôt du matériau sol-gel comprenant du zirconium n-propoxide et 3-glycidoxypropyltriméthoxy silane.

3. Procédé selon l'une quelconque des revendications 1 à 2, dans lequel le dépôt du matériau sol-gel (208) comprend le dépôt du matériau sol-gel comprenant entre 0,5 % en poids et 2 % en poids de zirconium n-propoxide et entre 1 % en poids et 3 % en poids de 3-glycidoxypropyltriméthoxy silane.

4. Procédé selon l'une quelconque des revendications 1 à 3, dans lequel le dépôt du matériau sol-gel (208) est réalisé à une température entre environ 10 °C et 35 °C.

5. Procédé selon l'une quelconque des revendications 1 à 4, dans lequel le dépôt du matériau sol-gel (208) comprend la pulvérisation.

6. Procédé selon l'une quelconque des revendications 1 à 5, dans lequel le dépôt du revêtement de conversion (204) comprend le dépôt du revêtement de conversion comprenant entre 30 % en poids et 60 % en poids d'acide chromique.

7. Procédé selon l'une quelconque des revendications 1 à 6, dans lequel la couche de conversion présente une épaisseur entre 10 nm et 800 nm.

8. Appareil comprenant :
un composant d'aluminium (102) ;
une couche de conversion (104), la couche de conversion étant disposée sur le composant d'aluminium (102) ;
une couche sol-gel (106) comprenant un organosilane et un alcoxyde de zirconium, la couche de sol-gel étant disposée sur la couche de conversion (104) ;
une couche adhésive durcie (108), la couche adhésive durcie étant disposée sur la couche sol-gel (106) ; et
un patch d'aluminium (110) disposé sur la couche adhésive durcie (108), dans lequel la couche de conversion (104), la couche sol-gel (106), et la couche adhésive durcie (108) forment une pile disposée entre le composant d'aluminium (102) et le patch d'aluminium (110), la pile fournissant une liaison structurelle entre le composant d'aluminium (102) et le patch d'aluminium (110).

9. Appareil selon la revendication 8, dans lequel la couche adhésive durcie (108) comprend un parmi époxy, polyimide, ou polyuréthane.

10. Appareil selon l'une quelconque des revendications 8 à 9, dans lequel la couche de conversion (104) comprend un parmi un revêtement de conversion de chromate ou un revêtement de conversion de phosphate.

11. Appareil selon l'une quelconque des revendications 8 à 10, dans lequel la couche de conversion (104) comprend du chrome hexavalent.

12. Appareil selon l'une quelconque des revendications 8 à 10, dans lequel la couche de conversion (104) est sensiblement exempte de chrome hexavalent.

13. Appareil selon l'une quelconque des revendications 8 à 12, dans lequel la couche de conversion présente une épaisseur entre 10 nm et 800 nm.
